# EUROPEAN PATENT SPECIFICATION

(11) **EP 2 653 564 B1**
(45) Date of publication and mention of the grant of the patent: **05.09.2018**
(21) Application number: 11856222.2
(22) Date of filing: 15.07.2011
(51) Int. Cl.: C21B 5/00, C21B 7/00, C21B 5/06, C21B 7/16

(54) **METHOD FOR OPERATING BLAST FURNACE**
BETRIEBSVERFAHREN FÜR EINEN VERBRENNUNGSOFEN
MÉTHODE D'EXPLOITATION D'UN HAUT FOURNEAU

(30) Priority: 18.01.2011 JP 2011007952; 18.01.2011 JP 2011007950; 18.01.2011 JP 2011007951; 08.07.2011 JP 2011152080
(43) Date of publication of application: 23.10.2013
(73) Proprietor: JFE Steel Corporation, Tokyo 100-0011 (JP)
(72) Inventor: FUJIWARA, Daiki, Tokyo 100-0011 (JP); MURAO, Akinori, Tokyo 100-0011 (JP); WATAKABE, Shiro, Tokyo 100-0011 (JP); MORIKAWA, Yasuyuki, Tokyo 100-0011 (JP)
(74) Representative: Hoffmann Eitle
(86) International application number: PCT/JP2011/066781
(87) International publication number: WO 2012/098715

(56) References cited:
- JP-A- 54 028 208
- JP-A- 57 034 198
- JP-A- 62 142 706
- JP-A- 62 222 006
- JP-A- 2000 160 216
- JP-A- 2004 091 921
- JP-A- 2006 152 434
- JP-A- 2006 233 332

## Description

### [Technical Field]

The present invention relates to a method for operating a blast furnace in which the combustion temperature is increased by injecting solid reducing agents such as pulverized coal and inflammable reducing agents such as an LNG (Liquefied Natural Gas) and a utility gas into the blast furnace through tuyeres thereof in order to improve productivity and decrease the specific consumption of reducing agents.

### [Background Art]

Nowadays, since there is a problem of global warming due to an increase in the amount of emitted carbon dioxide, it is an important problem also for the steel making industry to suppress the emission of CO₂. In view of this situation, in recent operation of blast furnaces, operation with a low reducing agent rate (RAR: the abbreviation of Reducing Agent Rate which means the total amount required to produce 1 ton of pig iron of reducing agents which are injected into a blast furnace through tuyeres and coke which is a solid reducing agent charged through the furnace top) is being strongly promoted. Since, as reducing agents in a blast furnace, coke which is a solid reducing agent charged through the furnace top and pulverized coal which is a solid reducing agent injected into the furnace through tuyeres are mainly used, it is an effective measure to replace the solid reducing agents such as coke and pulverized coal with reducing agents having a high hydrogen content such as waste plastic, utility gas and crude oil in order to achieve not only a low reducing agent rate but also the suppression of the emission of carbon dioxide. Patent Literature 1 described below proposes a method in which a double tube is used as a lance with which the reducing agents are injected into a blast furnace through tuyeres and in which an LNG is injected through the inner tube of the double tube lance and pulverized coal is injected through the outer tube of the double tube lance. In addition, Patent Literature 2 described below proposes a method in which a double tube is similarly used as a lance with which the reducing agents are injected through tuyeres and in which pulverized coal is injected through the inner tube of the double tube lance and an LNG is injected through the outer tube of the double tube lance.

### [Citation List]

### [Patent Literature]

[PTL 1] Japanese Unexamined Patent Application Publication No. 3176680
[PTL 2] Japanese Examined Patent Application Publication No. 1-29847

Further related prior art may be found in JP 2004 091921 A, JP 2006 233332 A, JP 2000 160216 A and JP 62 142706 A.

### [Summary of Invention]

The present invention is defined by the appended independent claim defining a method for operating a blast furnace using a double tube lance. The dependent claims are directed to optional features and preferred embodiments.

### [Technical Problem]

Although the methods for operating a blast furnace according to Patent Literatures 1 and 2 above are more effective for improving the combustion temperature and for the reduction of the specific consumption of reducing agents than a conventional method in which only pulverized coal is injected through tuyeres, there is room for further improvement.

The present invention has been completed in view of the problems described above, and an object of the present invention is to provide a method for operating a blast furnace in which further improvement in combustion temperature and further reduction of the specific consumption of reducing agents are possible.

### [Solution to Problem]

In order to solve the problems described above, the present invention provides a method for operating a blast furnace in which a solid reducing agent and an inflammable or combustible reducing agent are injected through a lance and a tuyere, the method including injecting a mixed reducing agent which is made by mixing the solid reducing agent and the inflammable or combustible reducing agent into a blast furnace.

In the method for operating a blast furnace described above, it is preferable that, when the mixed reducing agent which is made by mixing the solid reducing agent and the inflammable reducing agent is injected into a blast furnace, the solid reducing agent and the inflammable reducing or combustible agent be mixed with the ratio of the amount of solid reducing agent to the amount of inflammable reducing agent being in the range from 1 mass% to 300 mass%. It is more preferable that the solid reducing agent and the inflammable reducing agent be mixed with the ratio of the amount of solid reducing agent to the amount of inflammable reducing agent being in the range from 1 mass% to 180 mass%.

In the method for operating a blast furnace described above, it is preferable that the lance be a double tube lance (which is mentioned as a double wall lance) and that the mixed reducing agent which is made by mixing the solid reducing agent and the inflammable reducing agent be injected through the inner tube of the double tube lance and a combustion improving gas be injected through the outer tube of the double tube lance.

In the method for operating a blast furnace described above, it is preferable that the lance be a double tube lance and that a combustion improving gas be injected through the inner tube of the double tube lance and the mixed reducing agent which is made by mixing the solid reducing agent and the inflammable reducing agent be injected through the outer tube of the double tube lance.

In the method for operating a blast furnace described above, it is preferable that the flow rate of the combustion improving gas or the total flow rate of the gas carrying the solid reducing agent and the inflammable reducing agent which are injected through the outer tube of the double tube lance be adjusted so that a flow velocity at the exit of the outer tube is from 20 m/sec to 120 m/sec.

In the method for operating a blast furnace described above, it is preferable that the ratio of the amount of the inflammable reducing agent or the total amount of inflammable reducing agent and the combustion improvement gas to the total amount of all gasses which are injected through the double tube lance be from 25 volume% to 95 volume%.

In the method for operating a blast furnace described above, it is preferable that the combustion improving gas which is injected through the outer or the inner tube of the double tube lance be oxygen or an oxygen-enriched air and that some of the oxygen to be added to the blown air be injected through the outer or the inner tube of the double tube lance.

In the method for operating a blast furnace described above, it is preferable that the combustion improving gas which is injected through the outer or the inner tube of the double tube lance be an oxygen-enriched air and that some of the oxygen to be added to the injected air be injected through the outer or the inner tube of the double tube lance.

In the method for operating a blast furnace described above, it is preferable that the solid reducing agent be pulverized coal.

It is preferable that the amount of the solid reducing agent be from 50 kg to 300 kg per 1 ton of pig iron. It is more preferable that the amount of the solid reducing agent be from 60 kg to 180 kg per 1 ton of pig iron.

In the method for operating a blast furnace described above, it is preferable that the pulverized coal which is a solid reducing agent be mixed with waste plastic, a refuse derived fuel, an organic resource or waste material.

In the method for operating a blast furnace described above, it is preferable that the pulverized coal which is a solid reducing agent be mixed with waste plastic, a refuse derived fuel, an organic resource or a waste material with the content of the pulverized coal being 80 mass% or more.

In the method for operating a blast furnace described above, it is preferable that the inflammable reducing agent be a utility gas, a natural gas, propane gas, hydrogen, a converter gas, a blast furnace gas or a coke oven gas.

In addition, it is preferable that the amount of the inflammable reducing agent to be injected into the blast furnace be from 1 kg to 50 kg per 1 ton of pig iron. It is more preferable that the amount of the inflammable reducing agent to be injected into the blast furnace be from 10 kg to 35 kg per 1 ton of pig iron.

### [Advantageous Effects of Invention]

As described above, according to the method for operating a blast furnace of the present invention, by injecting a mixed reducing agent which is made by mixing solid reducing agents and inflammable reducing agents through a lance, the temperature of the solid reducing agents is significantly increased due to the combustion heat of the inflammable reducing agents, which results in an increase in the heating rate of the solid reducing agents and a significant increase in the combustion temperature of the solid reducing agents, which makes it possible to decrease the specific consumption of the reducing agents.

### [Brief Description of Drawings]

[Fig. 1] Fig. 1 is the vertical cross-sectional view of a blast furnace illustrating one of the embodiments of the blast furnace to which the method for operating a blast furnace of the present invention is applied.
[Fig. 2] Fig. 2 is a diagram illustrating combustion state in the case where only pulverized coal which is used as a solid reducing agent is injected through the lance in Fig. 1.
[Fig. 3] Fig. 3 is a diagram illustrating the combustion mechanism of the pulverized coal in Fig. 2.
[Fig. 4] Fig. 4 is a diagram illustrating the combustion mechanism in the case where pulverized coal and a utility gas which is used as an inflammable reducing agent are injected into the blast furnace.
[Fig. 5] Fig. 5 is a diagram illustrating a combustion test apparatus.
[Fig. 6] Fig. 6 is a diagram illustrating the results of the combustion tests.
[Fig. 7] Fig. 7 is a diagram illustrating the combustion temperature in the results of the combustion tests.
[Fig. 8] Fig. 8 is a diagram illustrating the combustion temperature in the results of the combustion tests.
[Fig. 9] Fig. 9 is a diagram illustrating the water jacket of a single tube lance.
[Fig. 10] Fig. 10 is a diagram illustrating the water jacket of a double tube lance.
[Fig. 11] Fig. 11 is a diagram illustrating the water jacket of a double tube lance.
[Fig. 12] Fig. 12 is a diagram illustrating the relationship between the flow rate of the gas which is injected through the single tube lance and the temperature of the surface of the lance.
[Fig. 13] Fig. 13 is a diagram illustrating the relationship between the flow rate of the gas which is injected through the outer tube of the double tube lance and the temperature of the surface of the lance.

### [Description of Embodiments]

One of the embodiments of the method for operating a blast furnace of the present invention will be described in reference to the figures.

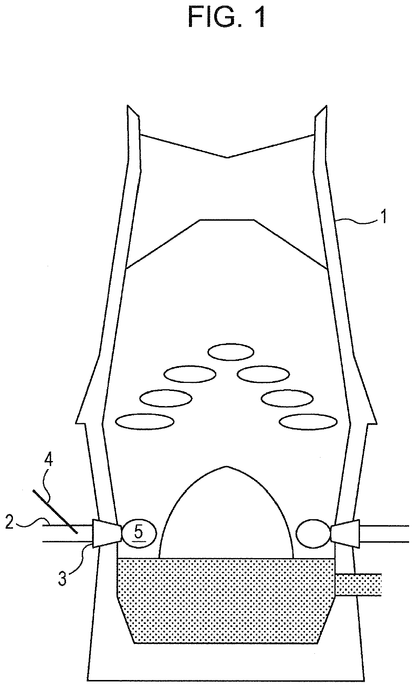

Fig. 1 is the general view of a blast furnace to which the method for operating a blast furnace according to the present embodiment is applied. As the figure illustrates, a blow pipe 2 through which hot air is blown is connected to a tuyere 3 of a blast furnace 1, and a lance 4 is installed so that the lance penetrates through the blow pipe 2. There is a combustion space which is called a raceway 5 in a coke heaped layer which exists at the end of the line in the direction in which the hot air is blown through the tuyere 3, and the combustion and gasification of reducing agents take place mainly in this combustion space.

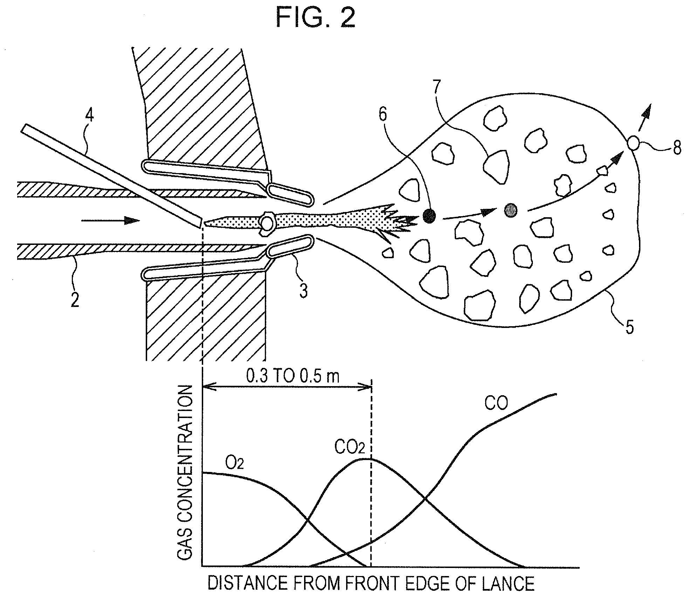

Fig. 2 illustrates combustion state in the case where only pulverized coal 6 which is used as a solid reducing agent is injected through the lance 4. The fixed carbon and the volatile matter of the pulverized coal 6 which is transferred through the lance 4 and the tuyere 3 and injected into the raceway 5 burn with coke 7, and the aggregate of carbon and ash material which is left unburnt and generally called char is discharged from the raceway as unburnt char 8. Since the velocity of the hot air at the end of the line in the direction in which the hot air blown through the tuyere 3 is blown is about 200 m/sec and it is generally believed that the area in which O₂ exists within the area from the front edge of the lance 4 to the inside of the raceway 5 is about from 0.3 m to 0.5 m, it is necessary to improve the heating rate and the contact efficiency (diffusivity) with O₂ of the particles of pulverized coal at a level of substantially 1/1000 second. Incidentally, the mean particle diameter of the pulverized coal which is injected into the blast furnace in practice is from 10 µm to 100 µm.

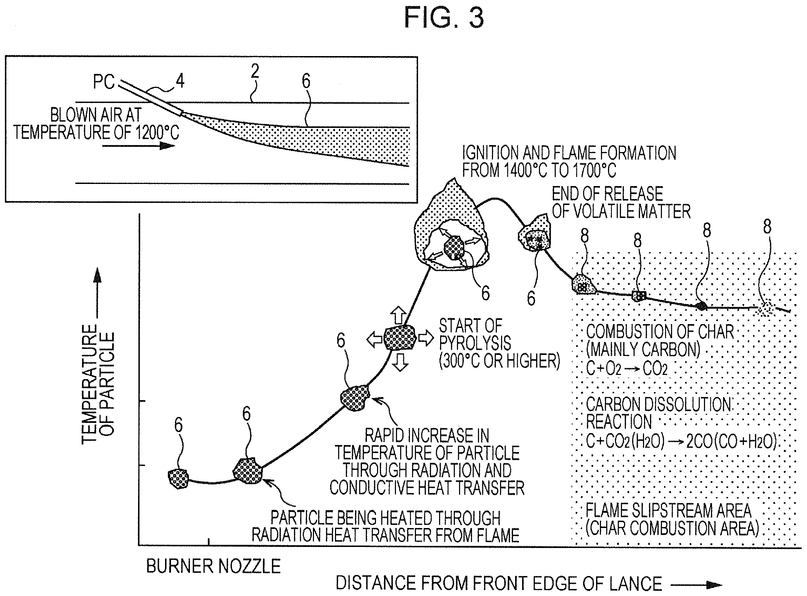

Fig. 3 illustrates the combustion mechanism in the case where only pulverized coal (represented by PC in the figure) 6 is injected through the lance 4 into the blow pipe 2. The particles of the pulverized coal 6 which is injected through the tuyere 3 into the raceway 5 are heated up through radiation heat transfer from flames in the raceway 5, the temperature of the particles is rapidly increased through radiation heat transfer and conductive heat transfer, the pyrolysis of the particles starts when the temperature of the particles becomes 300°C or higher, flames are formed due to the ignition of volatile matter, and the combustion temperature reaches from 1400°C to 1700°C. The particles from which the volatile matter has been released become the char 8 described above. Since the char 8 mainly consists of fixed carbon, a reaction which is called a carbon dissolution reaction occurs as well as a combustion reaction.

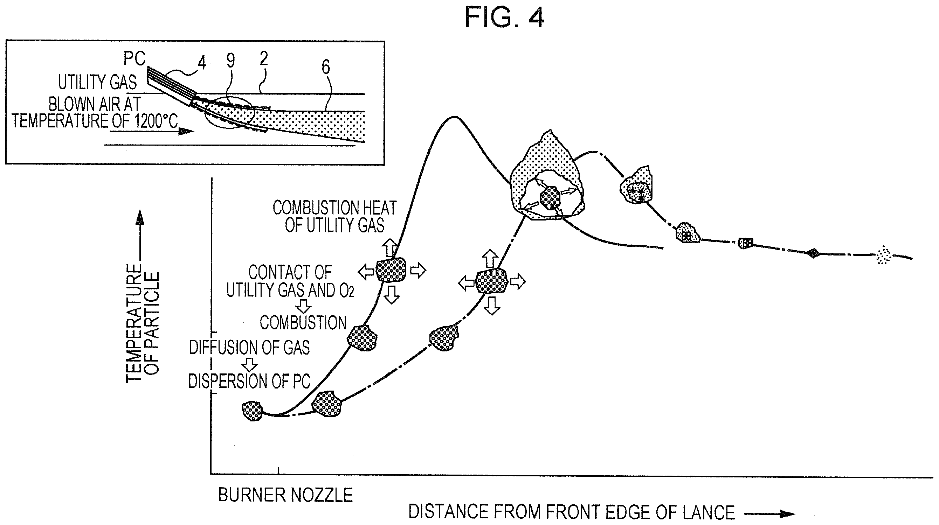

Fig. 4 illustrates the combustion mechanism in the case where a utility gas 9 which is used as an inflammable reducing agent with pulverized coal (represented by PC in the figure) 6 is injected through the lance 4 into the blow pipe 2. The utility gas 9 consists mainly of methane and additionally of ethane, propane, butane and the like. The examples of the composition of a utility gas are given in Table 1 below. Regarding the method for injecting the pulverized coal 6 and the utility gas 9, the case where they are injected simply in parallel with each other is illustrated in the figure. Here, the dashed line in the figure represents, for reference, the combustion temperature in the case where only pulverized coal is injected as illustrated in Fig. 3. In the case where pulverized coal and a utility gas are injected at the same time as described above, it is thought that the utility gas which is a gaseous matter preferentially burns, and, due to the combustion heat of this burning, pulverized coal is rapidly heated and the temperature of the pulverized coal rapidly increases, which results in there being a further increase in combustion temperature at positions nearer to the lance.

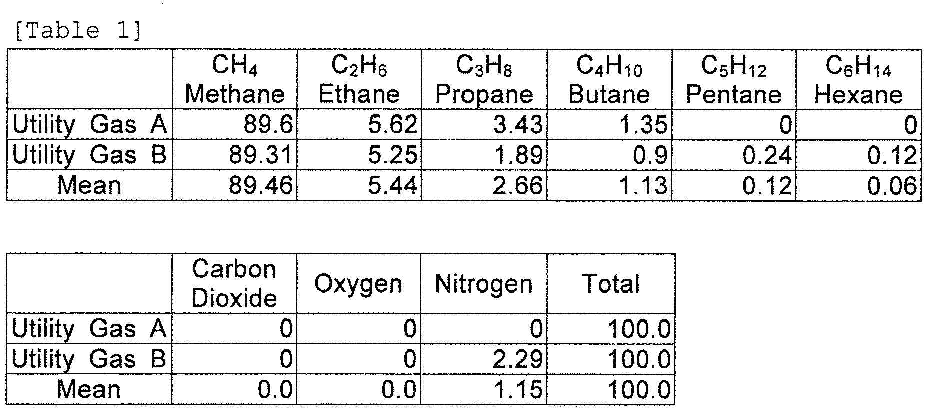

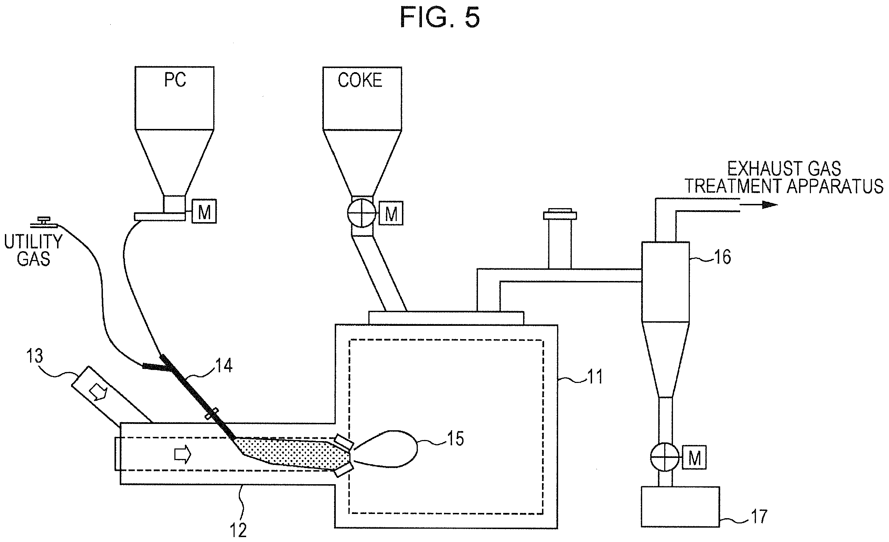

On the basis of the knowledge described above, combustion tests were carried out using a combustion test apparatus illustrated in Fig. 5. Coke was packed in a test furnace 11 in order to simulate conditions in a blast furnace, the inside of a raceway 15 could be observed through an observation window. A lance 14 was inserted into a blow pipe 12, through which hot air which was generated by using a combustion burner 13 could be injected into the test furnace 11 at a specified blow rate. In addition, it was possible to adjust the amount of oxygen added to the blown air with this blow pipe 12. Any one of the pulverized coal and the utility gas or both of them could be injected into the blow pipe 12 through the lance 14. An exhaust gas which was generated in the test furnace 11 was separated into an exhaust gas and dust by using a separating apparatus 16 called a cyclone, and the exhaust gas was transferred to an exhaust gas treatment apparatus such as an auxiliary combustion furnace and the dust was collected in a collection box 17.

The combustion tests were carried out using two kinds of lances, a single tube lance and a double tube lance as a lance 14, and the combustion temperature, the combustion position, the combustion state of unburnt char and diffusivity were observed using a two-color thermometer through the observation window in the case where only pulverized coal was injected through a single tube lance, in the case where, by using a double tube lance, pulverized coal was injected through the inner tube of the double tube lance while a utility gas which was used as an inflammable reducing agent was injected through the outer tube of the double tube lance, in the case where a utility gas which was used as an inflammable reducing agent was injected through the inner tube of the double tube lance while pulverized coal was injected through the outer tube of the double tube lance, in the case where a mixed reducing agent of a utility gas and pulverized coal was injected through the inner tube of the double tube lance while oxygen (hereinafter, simply referred as O₂) which was used as a combustion improving gas was injected through the outer tube, and in the case where O₂ which was used as a combustion improving gas was injected through the inner tube of the double tube lance while a mixed reducing agent of a utility gas and pulverized coal was injected through the outer tube.

A two-color thermometer is, as well known, a radiation thermometer with which temperature is observed through use of thermal radiation (the transfer of an electromagnetic wave from a body of a high temperature to a body of a low temperature), one of wavelength distribution meters with which a temperature is derived by observing the change in wavelength distribution with a temperature focusing on the fact that the wavelength distribution shifts to the side of the shorter wavelength with an increase in temperature, and, in particular, a thermometer with which a temperature is observed by observing the radiation energies corresponding to two wavelengths in order to detect a wavelength distribution. The combustion state of unburnt char was evaluated by observing the porosity of char which had been collected with a probe at positions 150 mm and 300 mm from the front edge of the lance 14 in the blow pipe 12 of the test furnace 11, embedded in resin, polished and subjected to image analysis.

The specifications of the pulverized coal were as follows: fixed carbon (FC: Fixed Carbon); 77.8%, volatile matter (VM: volatile Matter); 13.6%, ash material (Ash); 8.6% and injecting condition; 29.8 kg/h (corresponding to 100 kg per 1 ton of pig iron). In addition, the injecting condition of the utility gas was 3.6 kg/h (5 Nm³/h, corresponding to 10 kg per 1 ton of pig iron). The blowing conditions of the hot air were as follows: blown air temperature; 1200°C, flow rate; 300 Nm³/h, flow velocity; 70 m/s and amount of O₂ added; +5.5 (oxygen concentration; 26.5%, that is, increasing oxygen concentration by 5.5% from the oxygen concentration in the air of 21%).

The test results were evaluated by using the combustion temperature, the combustion position, the combustion state of unburnt char and diffusivity (mainly of pulverized coal) in the case where only pulverized coal was injected through a single tube lance (using N₂ as a carrier) as a standard, and the case where pulverized coal was injected through the inner tube of a double tube lance while a utility gas was injected through the outer tube, the case where a utility gas was injected through the inner tube of the double tube lance while pulverized coal was injected through the outer tube, the case where a mixed reducing agent of a utility gas and pulverized coal was injected through the single tube lance, the case where a mixed reducing agent of a utility gas and pulverized coal was injected through the inner tube of the double tube lance while a combustion improving gas, O₂ in this case, was injected through the outer tube, and the case where O₂ was injected through the inner tube of the double tube lance while a mixed reducing agent of a utility gas and pulverized coal was injected through the outer tube were evaluated. The evaluation results were represented as follows: Δ; equivalent to the case where only pulverized coal was injected, ○; improved a little, ⊙; significantly improved. Here, in the case where O₂ was injected as a combustion improving gas, some of the oxygen to be added to the blown air was used so that the total amount of O₂ which was blown into the furnace is kept unchanged. In addition, air may be used as a combustion improvement gas.

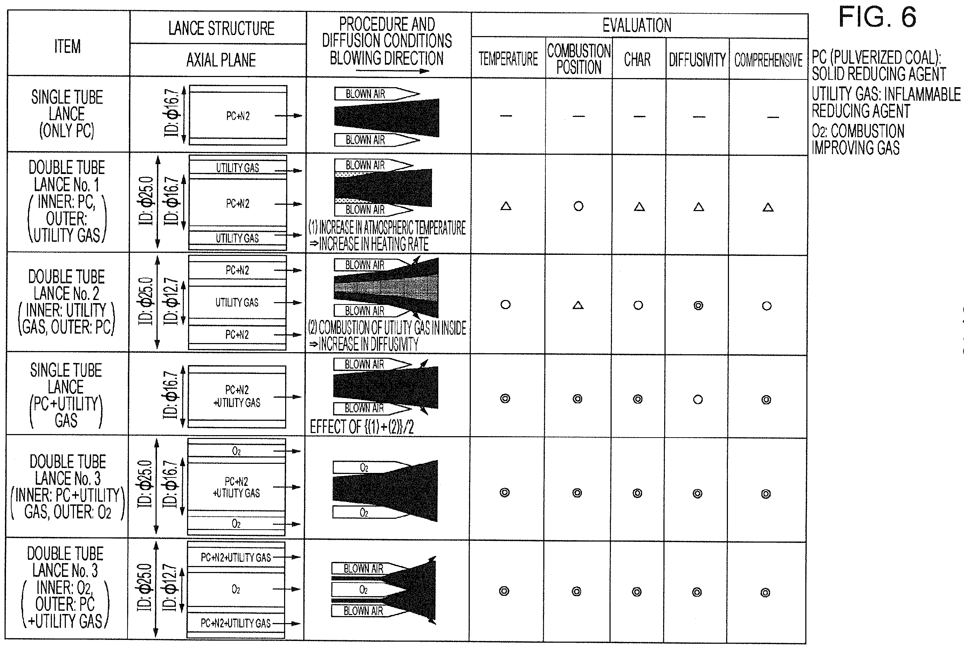

Fig. 6 illustrates the test results described above. Pulverized coal (PC in the figure) was injected with a carrier gas (nitrogen gas N₂ was used). As the figure indicates, it was clarified that in the case where pulverized coal was injected through the inner tube of the double tube lance while a utility gas was injected through the outer tube, although improvement in combustion position was recognized, no change was recognized regarding other items. This is thought to be because, although there was an increase in the heating rate of the pulverized coal due to the combustion heat of the utility gas which existed on the outside of the pulverized coal, which contacted O₂ earlier than the pulverized coal did and which quickly burned, since O₂ was expended in the combustion of the utility gas and there was a decrease in the amount of O₂ which was necessary for the combustion of the pulverized coal, a sufficient increase in combustion temperature could not be achieved and the combustion state of unburnt char could not be improved. On the other hand, in the case where a utility gas was injected through the inner tube of the double tube lance while pulverized coal was injected through the outer tube, although improvement in combustion temperature and the combustion state of unburnt char was recognized and significant improvement in diffusivity was recognized, no change of combustion position was recognized. This is thought to be because, although the diffusion of O₂ through the pulverized coal area which existed in the outer area into the utility gas which existed in the inner area took a long time, since an explosive diffusion occurred due to the combustion of the inflammable utility gas which existed in the inner area, there was an increase in the combustion temperature as the pulverized coal was heated by the combustion heat of the utility gas, and the combustion state of unburnt char was also improved.

The present inventors, on the basis of the test results described above, focused on using a single tube lance and injecting a mixed reducing agent which is made by mixing a utility gas and pulverized coal in advance through the single tube lance. That is to say, it was inferred that the reason why the improvement is insufficient may be that each of a utility gas and pulverized coal exists in an aggregate form and that, in the case where a utility gas disperses, the utility gas may burn in a wide area in first and, along with that, pulverized coal may diffuse over a wide area and be heated by the combustion heat of the utility gas, that the combustion position may become closer to the lance, that the combustion temperature may be increased and that the combustion state of unburnt char may also be improved.

Therefore, a test in which a mixed reducing agent, which was made by mixing a utility gas and pulverized coal in advance, was injected through a single tube lance was carried out, and, as a result, significant improvement of the combustion temperature, the combustion position and the combustion state of unburnt char was recognized. In addition, in order to promote the effect of explosive diffusion due to the combustion of the utility gas, by injecting O₂ through the inner tube of a double tube lance while injecting the mixed reducing agent of the utility gas and the pulverized coal through the outer tube, or by injecting the mixed reducing agent of the utility gas and the pulverized coal through the inner tube of a double tube lance while injecting O₂ through the outer tube, diffusivity was significantly improved while the significant improvement in combustion temperature, combustion position and the combustion state of unburnt char was maintained.

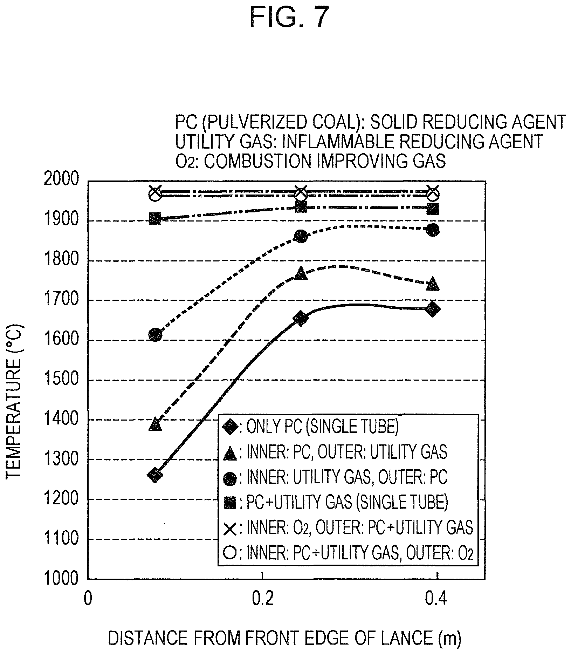

Fig. 7 illustrates the relationship between the combustion position and the combustion temperature in all the tests. As Fig. 7 and Fig. 6 illustrate, it is clarified that, the combustion temperature becomes higher than that in the case of a method in which only pulverized coal is injected through a single tube lance, in ascending order of combustion temperature, in the case of a method in which pulverized coal is injected through the inner tube of a double tube lance while a utility gas is injected through the outer tube, in the case of a method in which a utility gas is injected through the inner tube of the double tube lance while pulverized coal is injected through the outer tube, in the case of a method in which a mixed reducing agent of a utility gas and pulverized coal is injected through the single tube lance and in the case of a method in which a mixed reducing agent of a utility gas and pulverized coal is injected through the inner tube of the double tube lance while O₂ is injected through the outer tube or in the case of a method in which O₂ is injected through the inner tube of the double tube lance while a mixed reducing agent of a utility gas and pulverized coal is injected through the outer tube, and, in particular, significant improvement in combustion position is recognized in the case of a method in which a mixed reducing agent of a utility gas and pulverized coal is injected through a single tube lance. In addition, although, since significant improvement in diffusivity was recognized in the case of a method in which a utility gas was injected through the inner tube of a double tube lance while pulverized coal was injected through the outer tube, improvement in diffusivity in the case of a method in which the mixed reducing agent was injected through a single tube lance was evaluated as only a little, practically sufficient improvement in diffusivity was also recognized in the case of a method in which the mixed reducing agent was injected through a single tube lance and significant comprehensive improvement was also recognized. Moreover, significant improvement was recognized in the case of a method in which a mixed reducing agent of a utility gas and pulverized coal was injected through the inner tube of a double tube lance while O₂ was injected through the outer tube and in the case of a method in which O₂ was injected through the inner tube of a double tube lance while a mixed reducing agent of a utility gas and pulverized coal was injected through the outer tube. Improvement in combustion temperature is an indication of an increase in combustion amount, and there is a decrease in the amount of heaped fine powdery material (the amount of powdery material fed into a furnace) in front of a tuyere due to an increase in the combustion amount of solid reducing agents which are injected into the blast furnace, which results in improvement in gas permeability in the blast furnace. In case where heat balance is appropriate, it is possible to decrease the amount of charged coke (coke ratio) by the amount corresponding to the improvement in gas permeability, which results in a decrease in the specific consumption of reducing agents.

Subsequently, the present inventors observed change in combustion temperature while varying the ratio of the amount of a utility gas which is an inflammable reducing agent or a utility gas and O₂ which is a combustion improving gas to the total amount of gases which are injected through the double tube lance 4. This was done in order to confirm the effect of the temperature of pulverized coal being rapidly increased due to the combustion heat which is generated, for example, at the time when the utility gas burned with O₂ in first as described above. Therefore, in CASE 1 through CASE 5 as given in Table 2 below, the combustion temperature was observed at positions 165 mm and 315 mm from the front edge of a double tube lance while the flow rate of N₂ which was a carrier gas of the pulverized coal was constantly kept at 15 Nm³/h and the flow rate of the utility gas or the utility gas and O₂ was varied. Incidentally, the solid-gas ratio of pulverized coal and a carrier gas which carried the pulverized coal was from 10 kg/Nm³ to 25 kg/Nm³ in the case of a method in which powder, that is, the pulverized coal was transferred with a small amount of the gas (dense-phase conveying) and from 5 kg/Nm³ to 10 kg/Nm³ in the case of a method in which the pulverized coal was transferred with a large amount of the gas (dilute-phase conveying). Air may be used as a carrier gas other than N₂.

**[Table 2]**

| CASE | Carrier Gas (N₂) | O₂ + Utility Gas | O₂/Utility Gas |
|---|---|---|---|
| | Nm³/h | Nm³/h | - |
| 1 | 15 | 0 | - |
| 2 | 15 | 5 | 0 |
| 3 | 15 | 15 | 2 |
| 4 | 15 | 25 | 4 |
| 5 | 15 | 30 | 2 |

The flow rate of a utility gas or a utility gas and O₂ (O₂ + a utility gas) and the ratio of O₂ to a utility gas (O₂ / a utility gas) are given in the table. That is to say, neither O₂ nor a utility gas is injected in CASE 1. Only 5 Nm³/h of utility gas is injected in CASE 2. 5 Nm³/h of utility gas and 10 Nm³/h of O₂ are injected in CASE 3. 5 Nm³/h of utility gas and 20 Nm³/h of O₂ are injected in CASE 4. 10 Nm³/h of utility gas and 20 Nm³/h of O₂ are injected in CASE 5. In addition, the ratio of the amount of a utility gas or a utility gas and O₂ to the total amount of the gases which are injected through a double tube lance is 0 volume% in CASE 1, 25 volume% in CASE 2, 50 volume% in CASE 3, 62.5 volume% in CASE 4 and 66.7 volume% in CASE 5.

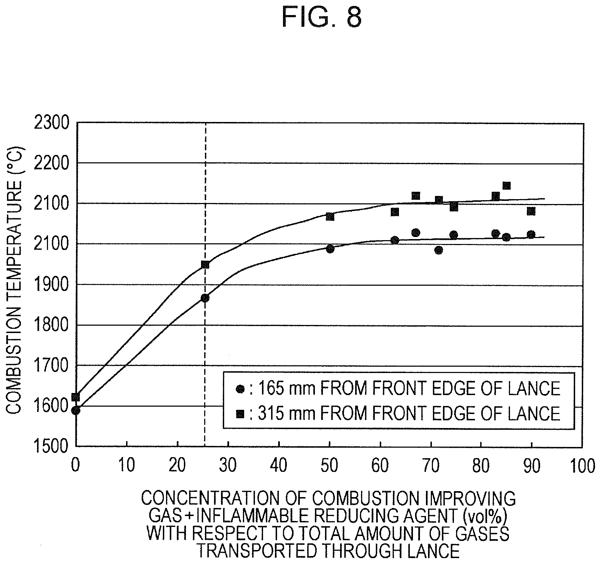

The specifications of the pulverized coal were as follows: fixed carbon FC; 77.2%, volatile matter VM; 12.2%, ash material Ash; 10.6% and injecting condition; 50 kg/h (corresponding to 142 kg per 1 ton of pig iron, using nitrogen as a carrier). The blowing conditions were as follows: blowing temperature; 1200°C, flow rate; 350 Nm³/h and amount of O₂ added; +3.5 (oxygen concentration; 24.5%). Here, in the case where O₂ was injected as a combustion improving gas, some of the oxygen to be added to the injected air was used so that the total amount of O₂ which was injected into the furnace was kept unchanged. In addition, air may be used as a combustion improving gas other than O₂. In the case where air was used, oxygen-enriched air in which oxygen content was increased by 2% or more, preferably 10% or more, was used in order to increase a combustion improving effect. As for a method for injecting the pulverized coal, the utility gas and O₂, O₂ was injected through the inner tube of a double tube lance and the mixed reducing agent of the utility gas and pulverized coal was injected through the outer tube. Fig. 8 illustrates the observation results.

As the figure illustrates, it is clarified that, since, in the region in which the ratio of the amount of the utility gas or the utility gas and O₂ to the total amount of the gases which are injected through the double tube lance is less than 25 volume%, the combustion temperature significantly increases with an increase in the ratio of the amount of the utility gas or the utility gas and O₂ to the total amount of the gases, it is difficult to achieve a high combustion temperature in this region. On the other hand, since, in the region in which the ratio of the amount of the utility gas or the utility gas and O₂ to the total amount of the gases which are injected through the double tube lance is 25 volume% or more, an increase in combustion temperature tends to saturate even if the ratio of the amount of the utility gas or the utility gas and O₂ to the total amount of the gases increases, it is possible to achieve a high combustion temperature in this region. Therefore, in the method for operating a blast furnace of the present embodiment, the ratio of the amount of an inflammable reducing agent or an inflammable reducing agent and a combustion improving gas to the total amount of gases which are injected through a double tube lance, that is, the ratio of a utility gas or a utility gas and O₂ is set to be 25 volume% or more, preferably 50 volume% or more. In addition, since, in the case where the ratio of the amount of the utility gas or the utility gas and O₂ to the total amount of the gases which are injected through the double tube lance is more than 95 volume%, an increase in combustion temperature tends to saturate, the upper limit of the ratio is set to be 95 volume% or less. In addition, although a utility gas is an example of an inflammable reducing agent, a natural gas (LNG), which mainly consists of methane and is equivalent to a utility gas as indicated in Table 3, may also be used.

**[Table 3]**

| Production Area | CH₄ Methane | C₂H₆ Ethane | C₃H₈ Propane | C₄H₁₀ Butane | C₅H₁₂ Pentane | Nitrogen | Total |
|---|---|---|---|---|---|---|---|
| Natural Gas A Alaska | 99.81 | 0.07 | 0 | 0 | 0 | 0.12 | 100.0 |
| Natural Gas B Brunei | 89.83 | 5.89 | 2.92 | 1.3 | 0.04 | 0.02 | 100.0 |
| Natural Gas C Abu Dhabi | 82.07 | 15.86 | 1.86 | 0.13 | 0 | 0.05 | 100.0 |
| Mean | 90.570 | 7.273 | 1.593 | 0.477 | 0.013 | 0.063 | 100.0 |

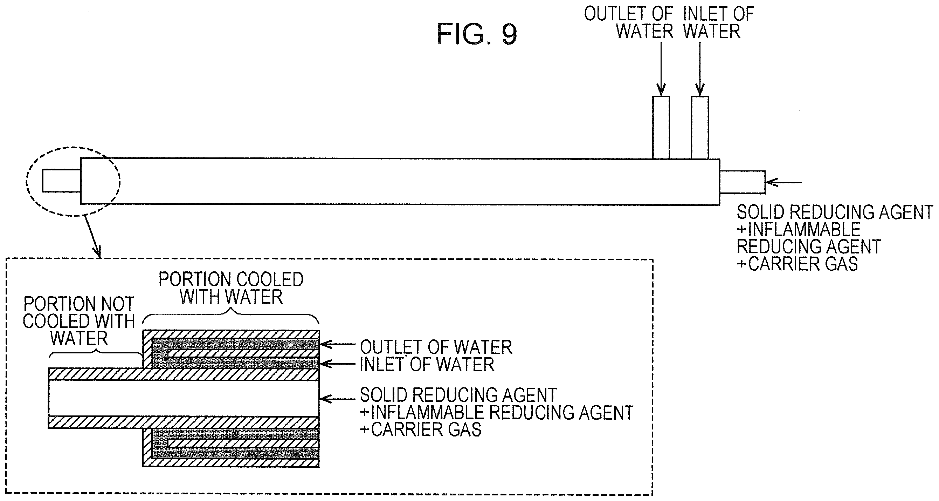

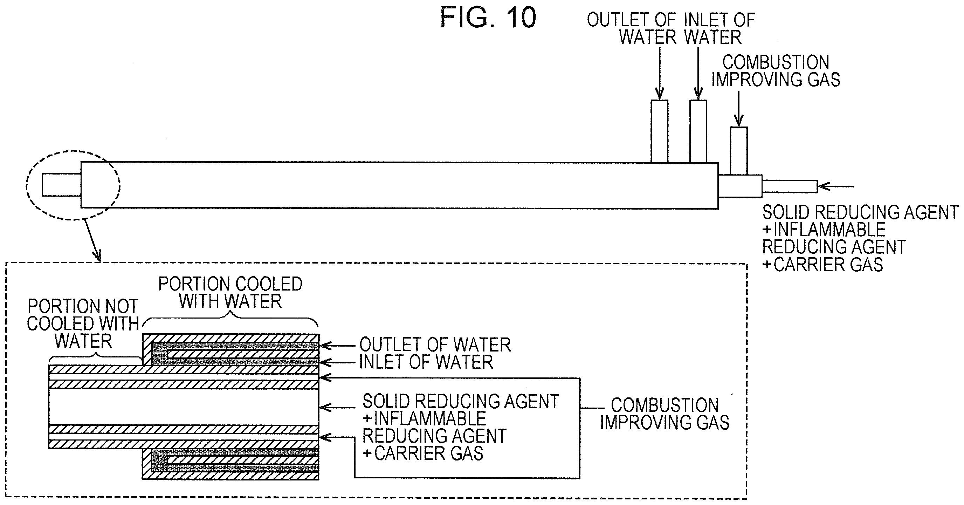

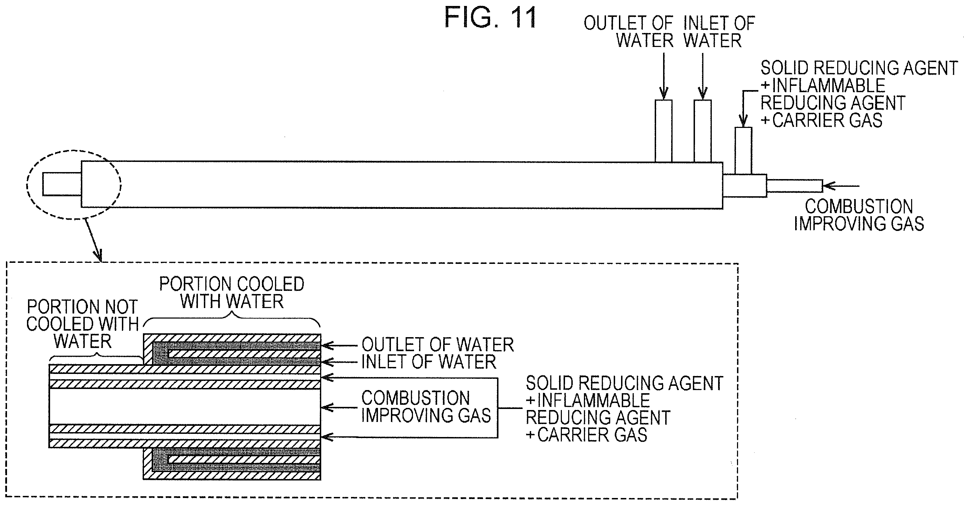

Incidentally, the outer tube of the double tube lance tends to be exposed to an atmosphere of a high temperature when the combustion temperature increases as described above. The double tube lance consists of, for example, stainless steel tubes. Although it is needless to say the outer tube of the double tube lance is cooled with a water cooling system such as so-called a water jacket, the jacket cannot reach the front edge of the lance. Fig. 9 illustrates the conditions of the water jacket (the portion cooled with water in the figure) of a single tube lance through which a mixed reducing agent of pulverized coal and a utility gas is injected. Through the single tube lance, a mixed reducing agent comprising a solid reducing agent, a carrier gas which is necessary for transfer of the solid reducing agent and a utility gas which is used as an inflammable reducing agent is injected. Fig. 10 illustrate the conditions of a water jacket of a double tube lance, in the case where pulverized coal, a carrier gas and a utility gas are injected through the inner tube of the double tube lance while O₂ is injected through the outer tube. Fig. 11 illustrates the conditions of a water jacket of a double tube lance, in the case where O₂ is injected through the inner tube of the double tube lance while pulverized coal, a carrier gas and a utility gas are injected through the outer tube.

It was found that the front edge portion of the outer tube of a double tube lance which, in particular, water cooling cannot reach as illustrated in Fig. 9, Fig. 10 and Fig. 11 is deformed due to heat. In the case where the outer tube of a double tube lance is deformed, that is, bent, it is impossible to blow pulverized coal, a utility gas or O₂ into a required position and there is difficulty in replancement of the lance which is an expendable item. In addition, it is also thought that the flow of pulverized coal is changed due to the bent lance so that the pulverized coal hits a tuyere, and there is concern that the tuyere may be damaged in this case. In the case where the outer tube of a double tube lance is bent, the space between the outer and the inner tubes may be closed and gas flow through the outer tube may be stopped, and the outer tube of the double tube lance may be damaged due to melting in this case or there may be a case where a blow pipe is broken. In the case where the lance is deformed or worn, it is impossible not only to achieve the combustion temperature described above but also to decrease the specific consumption of reducing agents.

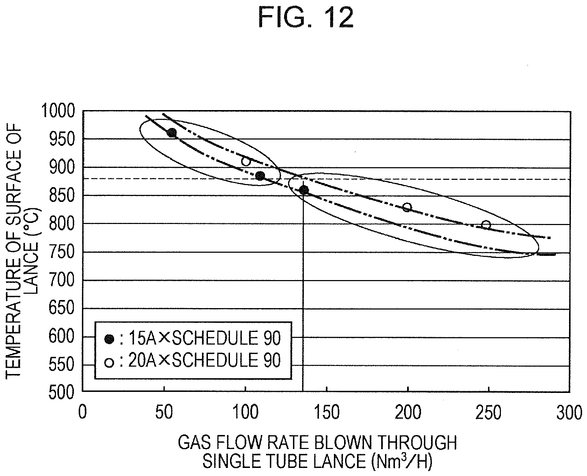

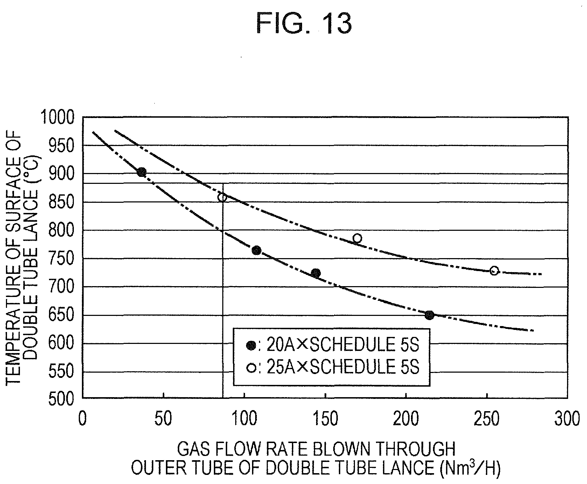

In order to cool the outer tube of a double tube lance which cannot be cooled with water, there is no other way but to dissipate heat through gases which is transferred through the inside of the lance. In the case the outer tube of a double tube lance is cooled by using the dissipation of heat through the gases which flow inside the lance, it is thought that the flow rate of the gases have an influence on the temperature of the lance. Therefore, the present inventors observed the surface temperature of the lance while the flow rate of the gases which were injected through the outer tube of the double tube lance was varied. The flow rate of the gases was adjusted by adding N₂ which is used as an inert gas to a utility gas which is normally injected through the outer tube of the double tube lance in the present embodiment. Incidentally, as for N₂ to be used here, some of a carrier gas which is used for the transfer of pulverized coal may be used. Fig. 12 illustrates the observation results in the case of the single tube lance, and Fig. 13 illustrates the observation results in the case of the double tube lance.

In addition, two kinds of steel tubes called 20A×Schedule5S and 25A×Schedule5S were used for the outer tube of the double tube lance. In addition, one kind of steel tube called 15A×Schedule90 was used for the inner tube of the double tube lance, and the surface temperature of the lance was observed while the total flow rate of N₂ and utility gas was varied. Here, "15A","20A" and "25A" are nominal dimensions for the outer diameters of the steel tubes in accordance with JIS G 3459, and 15A represents an outer diameter of 21.7 mm, 20A represents an outer diameter of 27.2 mm and 25A represents an outer diameter of 34.0 mm. In addition, "Schedule" is a nominal dimension for the thickness of the steel tube in accordance with JIS G 3459, and Schedule5S represents 1.65 mm, 15A×Schedule90 represents 3.70 mm and 20A×Schedule90 represents 3.90 mm. In addition, a steel tube called 25A×Schedule90 (outer diameter: 34 mm, thickness: 4.50 mm) may be used. In addition, it is practical that steel tubes of the dimensions of the outer diameters equivalent to those of the two kinds of steel tubes described above are used as the outer tube of a double tube lance. In addition, steel tubes called 20A×Schedule90 (thickness: 3.9 mm) and 25A×Schedule90 (thickness: 4.5 mm) may be used. Incidentally, other than stainless steel tubes, carbon steel may be applied. In this case, the outer diameter of a steel tube is in accordance with JIS G 3452 and the thickness of a steel tube is in accordance with JIS G 3454.

As the figures illustrate with two-dot chain lines, the surface temperature of the lance of each size of the steel tube decreases nearly in inverse proportion to an increase in the total flow rate of the gases which are injected through the outer tube of the double tube lance. This is because the flow velocity of a gas varies even with the same flow rate depending on the size of the steel tube. In the case where steel tubes are used for a double tube lance, creep deformation occurs when the surface temperature of the double tube lance becomes higher than 880°C, which results in the double tube lance being bent.

In addition, in the case where a steel tube called 20A×Schedule5S or 25A×Schedule5S is used for the outer tube of a double tube lance and the surface temperature of the double tube lance is 880°C or lower, the total flow rate of gases injected through the outer tube is set to be 85 Nm³/h or more, and the flow velocity at the exit of the outer tube of the double tube lance is 20 m/sec or more in the case where these steel tubes are used for the outer tube of the double tube lance. Then, since, in the case where the total flow rate of the gases injected through the outer tube of the double tube lance is set to be 85 Nm³/h or more and the flow velocity at the exit of the outer tube of the double tube lance is 20 m/sec or more, the surface temperature of the outer tube of the double tube lance becomes 880°C or lower, the double tube lance is not deformed or bent. On the other hand, since, in the case where the total flow rate of the gases injected through the outer tube of the double tube lance is more than 800 Nm³/h or the flow velocity at the exit is more than 120 m/sec, it is not practical from the viewpoint of operation cost of the apparatus, the upper limit of the total flow rate of the gases injected through the outer tube of the double tube lance is set to be 800 Nm³/h and the upper limit of the flow velocity at the exit is set to be 120 m/sec. That is to say, in order to cool the outer tube of the double tube lance which cannot be cooled with water, the total flow rate of the gases injected through the outer tube of the double tube lance is set to be adjusted so that the flow velocity at the exit of the outer tube of the double tube lance is from 20 m/sec to 120 m/sec.

The deformation (bending) of a double tube lance is prevented by adjusting, in the case of a double tube lance, the flow rate of a combustion improving gas or the carrier gas of a solid reducing agent and an inflammable reducing agent so that the flow velocity at the exit of the outer tube of the double tube lance is 20 m/sec or more, and, in accordance with this, the amount of solid reducing agents such as pulverized coal which are injected through the the double tube lance is set to be from 50 kg to 300 kg per 1 ton of pig iron. That is to say, since there is a limitation on the lower limit of the amount of materials to be injected through a lance due to facility conditions, it is necessary to take measures such as closing some of tuyeres in the case where a injected reducing agent rate is excessively small, which results in there being a deviation in the circumferential direction due to coexisting of tuyeres through which reducing agents are injected and tuyeres through which reducing agents are not injected, which is not preferable for the steady operation of a blast furnace. Therefore, the amount of solid reducing agents is set to be 50 kg or more per 1 ton of pig iron. In addition, in the case where the injected reducing agent rate of solid reducing agents is excessively small, the relative amount of charged materials which are provided with heat through heat exchange between gases and the charged materials becomes large, which results in a decrease in the temperature of gases at the furnace top. In order to prevent the temperature at the furnace top from becoming equal to a dewpoint or lower, the amount of solid reducing agents is again set to be 50 kg or more per 1 ton of pig iron, preferably 60 kg or more.

Moreover, there is the upper limit on the injected reducing agent rate due to the limitation of gas permeability from the viewpoint of operation with a low reducing agent rate, because a reducing agent rate for a solid reducing agent (coke) which is charged through the furnace top is decreased with an increase in the injected reducing agent rate of solid reducing agents, which results in a decrease in gas permeability, and, in the case where a total pressure loss (blown air pressure - furnace top pressure) exceeds the acceptable limit, it is impossible to decrease the reducing agent rate (for coke) even if the amount of the injected reducing agents is further increased, which results in steady operation being hampered or may result in operation itself becoming impossible. Also in order to protect furnace top devices, the amount of solid reducing agents is set to be 300 kg or less per 1 ton of pig iron, preferably 180 kg or less per 1 ton of pig iron.

In addition, 1 kg or more of inflammable reducing agents such as a utility gas and a natural gas (LNG) per 1 ton of pig iron is necessary from the viewpoint of achieving a high combustion temperature, and the upper limit is set to be 50 kg or less per 1 ton of pig iron in order to protect tuyeres and furnace top devices, preferably from 10 kg to 35 kg per 1 ton of pig iron.

By calculating from the values described above, the ratio of the amount of solid reducing agents to the amount of inflammable reducing agent (by mass%) becomes from 1 to 300, preferably from 1 to 180.

Moreover, oxygen or oxygen-enriched air is used as a combustion improving gas in a double tube lance, and at least 1 Nm³ or more of this kind of gas per 1 ton of pig iron is necessary in order to achieve the good combustion quality of solid reducing agents and inflammable reducing agents. The upper limit is determined in consideration of manufacturing cost, and it is set to be 80 Nm³ or less per 1 ton of pig iron. Incidentally, the oxygen enrichment ratio of the oxygen-enriched air is set to be 2% or more, preferably 10% or more.

In addition, although a mean particle diameter of pulverized coal in practice is from 10 µm to 100 µm, it is preferable that, in the present invention, the mean particle diameter be from 20 µm to 50 µm in order to achieve a good combustion quality and in consideration of transportation from a lance and feeding to a lance. In the case where the mean particle diameter of pulverized coal is less than 20 µm, although a combustion quality is good, pulverized coal tends to get stuck in a lance when being transported (pneumatic transportation), and there is concern that the combustion quality of pulverized coal may be deteriorated in the case where the mean particle diameter of pulverized coal is more than 50 µm.

In addition, a solid reducing agent to be injected which mainly consists of pulverized coal and to which waste plastic, refuse derived fuel (RDF), organic resources (biomass) or waste materials are mixed may be used. In the case where the mixture is used, it is preferable that the ratio of the amount of pulverized coal to the total amount of the solid reducing agent be 80 mass% or more. That is to say, since heat quantity which is generated by reaction of waste plastic, refuse derived fuel (RDF), organic resources (biomass) or waste materials is different from that generated by pulverized coal, combustion state tend to become uneven in the case where their mixing ratios become close to that of pulverized coal, which tends to result in unsteady operation. In addition, since heat quantities which are generated by combustion reaction of waste plastic, refuse derived fuel (RDF), organic resources (biomass), waste materials or the like is less than that generated by pulverized coal, efficiency at which solid reducing agents which are charged through the furnace top are replanced with the injected solid reducing agents decreases in the case where a large amount of them are used to be injected. That is why it is preferable that the content of pulverized coal be 80 mass% or more.

Incidentally, waste plastic, refuse derived fuel (RDF), organic resources (biomass) or waste materials can be mixed with pulverized coal by grinding them into fine particles having a diameter of 6 mm or less, preferably 3 mm or less. Regarding their ratio to the pulverized coal, they can be mixed with pulverized coal by making them join pulverized coal which is being transported with a carrier gas. They may be mixed with pulverized coal in advance.

Moreover, other than a utility gas or natural gas, propane gas, hydrogen and gases generated in a steel works such as a converter gas, a blast furnace gas and a coke oven gas may be used as inflammable reducing agents.

### [Reference Signs List]

1: blast furnace, 2: blow pipe, 3: tuyere, 4: lance, 5: raceway, 6: pulverized coal (solid reducing agent), 7: coke, 8: char, 9: utility gas (inflammable reducing agent)

## Claims

1. A method for operating a blast furnace (1) in which a solid reducing agent (6) and an inflammable reducing agent (9) are injected from a tuyere (3) through a lance (4), wherein the lance is a double tube lance, the method comprising:
injecting a mixed reducing agent which is made by mixing the solid reducing agent and the inflammable reducing agent into the blast furnace,
**characterized in that**
the mixed reducing agent, which is made by mixing the solid reducing agent and the inflammable reducing agent, is injected through an inner tube of the double tube lance; and
a combustion improving gas is injected into the blast furnace through an outer tube of the double tube lance, or wherein
a combustion improving gas is injected into the blast furnace through an inner tube of the double tube lance; and
the mixed reducing agent, which is made by mixing the solid reducing agent and the inflammable reducing agent, is injected through an outer tube of the double tube lance,
and
a ratio of the inflammable reducing agent to the total amount of all gasses or the inflammable reducing agent and the combustion improvement gas to the total amount of all gasses is from 25 volume% to 95 volume%, the total amount of all gasses being injected through the double tube lance.

2. The method according to claim 1, wherein
the solid reducing agent and the inflammable reducing agent are mixed, a ratio of the solid reducing agent to the inflammable reducing agent by mass being in a range of from 1 mass% to 300 mass%, when the solid reducing agent and the inflammable reducing agent are mixed and the mixed reducing agent is injected into the blast furnace.

3. The method according to claim 2, wherein
the solid reducing agent and the inflammable reducing agent are mixed with a ratio of the solid reducing agent to the inflammable reducing agent by mass being in a range of from 1 mass% to 180 mass%.

4. The method according to claim 1, further comprising:
adjusting a flow rate of the combustion improving gas or a flow rate of the gas carrying the solid reducing agent and the inflammable reducing agent which are injected through the outer tube of the double tube lance so that a flow velocity at the exit of the outer tube is from 20 m/sec to 120 m/sec.

5. The method according to claim 1, wherein
the combustion improving gas, which is injected through the outer or the inner tube of the double tube lance, is oxygen or an oxygen-enriched air;
a portion of the oxygen to be added to a hot blast air is injected through the outer or the inner tube of the double tube lance.

6. The method according to Claim 5, wherein
the combustion improving gas, which is injected through the outer or the inner tube of the double tube lance, is an oxygen-enriched air;
a portion of the oxygen to be added to the hot blast air is injected through the outer or the inner tube of the double tube lance.

7. The method according to any one of claims 1 to 6, wherein
the solid reducing agent is a pulverized coal.

8. The method according to claim 7, wherein
the solid reducing agent is injected in an amount in the range from 50 kg to 300 kg per 1 ton of pig iron into the blast furnace.

9. The method according to claims 8, wherein
the solid reducing agent is injected in an amount in the range from 60 kg to 180 kg per 1 ton of pig iron into the blast furnace.

10. The method according any one of claims 7 to 9, wherein
the pulverized coal, which is a solid reducing agent, is mixed with waste plastic, a refuse derived fuel, an organic resource or a waste material.

11. The method according to claim 10, wherein
the pulverized coal, which is a solid reducing agent, is mixed with waste plastic, a refuse derived fuel, an organic resource or a waste material with the content of the pulverized coal being 80 mass% or more.

12. The method according to any one of claims 1 to 11, wherein
the inflammable reducing agent is a utility gas, a natural gas, propane gas, hydrogen, a converter gas, a blast furnace gas or a coke oven gas.

13. The method according to claim 12, wherein
the inflammable reducing agent is injected in an amount in the range from 1 kg to 50 kg per 1 ton of pig iron into the blast furnace.

14. The method according to claim 13, wherein
the inflammable reducing agent is injected in an amount in the range from 10 kg to 35 kg per 1 ton of pig iron into the blast furnace.

## Patentansprüche

1. Verfahren zum Betreiben eines Hochofens (1), wobei ein festes Reduktionsmittel (6) und ein entflammbares Reduktionsmittel (9) von einer Düse (3) durch eine Lanze (4) eingeblasen werden, wobei die Lanze eine doppelwandige Lanze ist, das Verfahren umfassend:
Einblasen eines gemischten Reduktionsmittels, welches durch Mischen des festen Reduktionsmittels und des entflammbaren Reduktionsmittels erzeugt wird, in den Hochofen,
**dadurch gekennzeichnet, dass**
das gemischte Reduktionsmittel, welches durch Mischen des festen Reduktionsmittels und des entflammbaren Reduktionsmittels erzeugt wird, durch eine innere Röhre der doppelwandigen Lanze eingeblasen wird; und
ein verbrennungsverbesserndes Gas durch eine äußere Röhre der doppelwandigen Lanze in den Hochofen eingeblasen wird oder wobei
ein verbrennungsverbesserndes Gas durch eine innere Röhre der doppelwandigen Lanze in den Hochofen eingeblasen wird; und
das gemischte Reduktionsmittel, welches durch Mischen des festen Reduktionsmittels und des entflammbaren Reduktionsmittels erzeugt wird, durch eine äußere Röhre der doppelwandigen Lanze eingeblasen wird und
ein Verhältnis des entflammbaren Reduktionsmittels zu der Gesamtmenge aller Gase oder des entflammbaren Reduktionsmittels und des verbrennungsverbessernden Gases zu der Gesamtmenge aller Gase von 25 Volumen% bis 95 Volumen% ist, wobei die Gesamtmenge aller Gase durch die doppelwandige Lanze eingeblasen wird.

2. Verfahren nach Anspruch 1, wobei
das feste Reduktionsmittel und das entflammbare Reduktionsmittel gemischt werden, wobei ein Verhältnis des festen Reduktionsmittels zu dem entflammbaren Reduktionsmittel nach Masse in einem Bereich von 1 Masse% bis 300 Masse% ist, wenn das feste Reduktionsmittel und das entflammbare Reduktionsmittel gemischt sind und das gemischte Reduktionsmittel in den Hochofen eingeblasen wird.

3. Verfahren nach Anspruch 2, wobei
das feste Reduktionsmittel und das entflammbare Reduktionsmittel in einem Masseverhältnis des festen Reduktionsmittels zu dem entflammbaren Reduktionsmittel in einem Bereich von 1 Masse% bis 180 Masse% gemischt sind.

4. Verfahren nach Anspruch 1, weiterhin aufweisend:
Anpassen einer Strömungsrate des verbrennungsunterstützenden Gases oder einer Strömungsrate des das feste Reduktionsmittel und das entflammbare Reduktionsmittel tragenden Gases, welche durch die äußere Röhre der doppelwandigen Lanze eingeblasen werden, so dass eine Strömungsgeschwindigkeit am Ausgang der äußeren Röhre zwischen 20 m/s und 120 m/s ist.

5. Verfahren nach Anspruch 1, wobei
das verbrennungsunterstützende Gas, welches durch die äußere oder die innere Röhre der doppelwandigen Lanze eingeblasen wird, Sauerstoff oder eine sauerstoffangereicherte Luft ist;
wobei ein dem Heißwind hinzuzugebender Anteil des Sauerstoffs durch die äußere oder die innere Röhre der doppelwandigen Lanze eingeblasen wird.

6. Verfahren nach Anspruch 5, wobei
das verbrennungsunterstützende Gas, welches durch die äußere oder die innere Röhre der doppelwandigen Lanze eingeblasen wird, eine sauerstoffangereicherte Luft ist;
wobei ein dem Heißwind hinzuzugebender Anteil des Sauerstoffs durch die äußere oder die innere Röhre der doppelwandigen Lanze eingeblasen wird.

7. Verfahren nach einem der Ansprüche 1 bis 6, wobei das feste Reduktionsmittel ein Kohlenstaub ist.

8. Verfahren nach Anspruch 7, wobei
das feste Reduktionsmittel in einer Menge im Bereich von 50 kg bis 300 kg je 1 Tonne Roheisen in den Hochofen eingeblasen wird.

9. Verfahren nach Anspruch 8, wobei
das feste Reduktionsmittel in einer Menge im Bereich von 60 kg bis 180 kg je 1 Tonne Roheisen in den Hochofen eingeblasen wird.

10. Verfahren nach einem der Ansprüche 7 bis 9, wobei
der Kohlenstaub, welcher ein festes Reduktionsmittel ist, mit Kunststoffabfällen, einem Brennstoff aus Müll, einem organischen Mittel oder einem Abfallmaterial gemischt ist.

11. Verfahren nach Anspruch 10, wobei
der Kohlenstaub, welcher ein festes Reduktionsmittel ist, mit Kunststoffabfällen, einem Brennstoff aus Müll, einem organischen Mittel oder einem Abfallmaterial gemischt ist, wobei ein Gehalt des Kohlenstaubs 80 Masse% oder mehr ist.

12. Verfahren nach einem der Ansprüche 1 bis 11, wobei
das entflammbare Reduktionsmittel ein Nutzgas, ein Erdgas, Propangas, Wasserstoff, ein Konvertergas, ein Gichtgas oder ein Kokereigas ist.

13. Verfahren nach Anspruch 12, wobei
das entflammbare Reduktionsmittel in einer Menge von 1 kg bis 50 kg je 1 Tonne Roheisen in den Hochofen eingeblasen wird.

14. Verfahren nach Anspruch 13, wobei
das entflammbare Reduktionsmittel in einer Menge von 10 kg bis 35 kg je 1 Tonne Roheisen in den Hochofen eingeblasen wird.

## Revendications

1. Procédé pour faire fonctionner un haut-fourneau (1) dans lequel un agent réducteur solide (6) et un agent réducteur inflammable (9) sont injectés à partir d'une tuyère (3) à travers une lance (4), dans lequel la lance est une lance à double tube, le procédé comprenant :
l'injection d'un agent réducteur mixte qui est préparé par le mélange de l'agent réducteur solide et de l'agent réducteur inflammable dans le haut-fourneau,
**caractérisé en ce que**
l'agent réducteur mixte, qui est préparé par le mélange de l'agent réducteur solide et de l'agent réducteur inflammable, est injecté à travers un tube interne de la lance à double tube ; et
un gaz améliorant la combustion est injecté dans le haut-fourneau à travers un tube externe de la lance à double tube,
ou dans lequel
un gaz améliorant la combustion est injecté dans le haut-fourneau à travers un tube interne de la lance à double tube ; et
l'agent réducteur mixte, qui est préparé par le mélange de l'agent réducteur solide et de l'agent réducteur inflammable, est injecté à travers un tube externe de la lance à double tube,
et
un rapport de l'agent réducteur inflammable sur la quantité totale de tous les gaz ou de l'agent réducteur inflammable et du gaz améliorant la combustion sur la quantité totale de tous les gaz est de 25 % en volume à 95 % en volume, la quantité totale de tous les gaz étant injectée à travers la lance à double tube.

2. Procédé selon la revendication 1, dans lequel
l'agent réducteur solide et l'agent réducteur inflammable sont mélangés, un rapport de l'agent réducteur solide sur l'agent réducteur inflammable en masse étant situé dans une plage allant de 1 % en masse à 300 % en masse, quand l'agent réducteur solide et l'agent réducteur inflammable sont mélangés et l'agent réducteur mixte est injecté dans le haut-fourneau.

3. Procédé selon la revendication 2, dans lequel
l'agent réducteur solide et l'agent réducteur inflammable sont mélangés avec un rapport de l'agent réducteur solide sur l'agent réducteur inflammable en masse situé dans une plage allant de 1 % en masse à 180 % en masse.

4. Procédé selon la revendication 1, comprenant en outre :
l'ajustement d'un débit du gaz améliorant la combustion ou d'un débit du gaz portant l'agent réducteur solide et l'agent réducteur inflammable qui sont injectés à travers le tube externe de la lance à double tube de façon à ce qu'une vitesse d'écoulement à la sortie du tube externe soit de 20 m/sec à 120 m/sec.

5. Procédé selon la revendication 1, dans lequel
le gaz améliorant la combustion, qui est injecté à travers le tube externe ou interne de la lance à double tube, est de l'oxygène ou de l'air enrichi en oxygène ;
une partie de l'oxygène à ajouter à un souffle d'air chaud est injectée à travers le tube externe ou interne de la lance à double tube.

6. Procédé selon la revendication 5, dans lequel
le gaz améliorant la combustion, qui est injecté à travers le tube externe ou interne de la lance à double tube, est de l'air enrichi en oxygène ;
une partie de l'oxygène à ajouter au souffle d'air chaud est injectée à travers le tube externe ou interne de la lance à double tube.

7. Procédé selon l'une quelconque des revendications 1 à 6, dans lequel l'agent réducteur solide est un charbon pulvérisé.

8. Procédé selon la revendication 7, dans lequel
l'agent réducteur solide est injecté en une quantité située dans la plage allant de 50 kg à 300 kg pour 1 tonne de fonte de première fusion dans le haut-fourneau.

9. Procédé selon la revendication 8, dans lequel
l'agent réducteur solide est injecté en une quantité située dans la plage allant de 60 kg à 180 kg pour 1 tonne de fonte de première fusion dans le haut-fourneau.

10. Procédé selon l'une quelconque des revendications 7 à 9, dans lequel
le charbon pulvérisé, qui est un agent réducteur solide, est mélangé avec des déchets plastiques, un combustible issu de déchets, une ressource organique ou des déchets.

11. Procédé selon la revendication 10, dans lequel
le charbon pulvérisé, qui est un agent réducteur solide, est mélangé avec des déchets plastiques, un combustible issu de déchets, une ressource organique ou des déchets avec une teneur du charbon pulvérisé étant de 80 % en masse ou plus.

12. Procédé selon l'une quelconque des revendications 1 à 11, dans lequel
l'agent réducteur inflammable est un gaz de distribution publique, un gaz naturel, du propane gazeux, de l'hydrogène, un gaz de convertisseur, un gaz de haut-fourneau ou un gaz de four à coke.

13. Procédé selon la revendication 12, dans lequel
l'agent réducteur inflammable est injecté en une quantité située dans la plage allant de 1 kg à 50 kg pour 1 tonne de fonte de première fusion dans le haut-fourneau.

14. Procédé selon la revendication 13, dans lequel
l'agent réducteur inflammable est injecté en une quantité située dans la plage allant de 10 kg à 35 kg pour 1 tonne de fonte de première fusion dans le haut-fourneau.
